# EUROPÄISCHE PATENTSCHRIFT

(11) **EP 2 386 492 B1**
(45) Veröffentlichungstag und Bekanntmachung des Hinweises auf die Patenterteilung: **28.08.2013**
(21) Anmeldenummer: 11003666.2
(22) Anmeldetag: 04.05.2011
(51) Int. Cl.: B65B 9/04, B65B 47/10, B29C 51/46

(54) **Verpackungsmaschine und -verfahren mit Drucklufterzeugung**
Packaging machine and method with compressed air generation
Machine et procédé d'emballage avec production d'air comprimé

(30) Priorität: 06.05.2010 DE 102010019636
(43) Veröffentlichungstag der Anmeldung: 16.11.2011
(73) Patentinhaber: Multivac Sepp Haggenmüller GmbH & Co. KG, 87787 Wolfertschwenden (DE)
(72) Erfinder: Diehl, Martin, 86150 Augsburg (DE)
(74) Vertreter: Grünecker, Kinkeldey, Stockmair & Schwanhäusser

(56) Entgegenhaltungen:
- DE-A1- 3 111 925
- DE-A1- 10 327 092
- US-A- 2 724 225
- US-A- 4 012 888
- US-A- 4 069 645

## Beschreibung

Die Erfindung bezieht sich auf eine Tiefziehverpackungsmaschine gemäß dem Oberbegriff des Anspruchs 1 sowie auf ein Verfahren gemäß dem Oberbegriff des Anspruchs 7.

Verpackungsmaschinen stehen üblicherweise in Produktionshallen, in denen eine zentrale Druckluftversorgung zur Verfügung steht, um alle Arten von Produktionsmaschinen mit Druckluft zu versorgen. Speziell bei Tiefziehverpackungsmaschinen ist für das Tiefziehen bzw. Formen von Mulden in die untere Folienbahn Druckluft erforderlich. Ebenso wird für den Siegelvorgang Druckluft zum Erzeugen des für das Siegelverfahren notwendigen Anpressdrucks der oberen Folienbahn auf die untere Folienbahn benötigt.

In kleinen Lebensmittelbetrieben oder Metzgereien sind keine zentralen Druckluftversorgungen vorhanden. Aber auch hier sollen Tiefziehverpackungsmaschinen eingesetzt werden. In solchen Betrieben wäre es von Vorteil, wenn die Tiefziehverpackungsmaschine nur einen Stromanschluss benötigen würde und weitere Medienanschlüsse für Medien wie Druckluft, Vakuum und Kühlwasser nicht notwendig sind.

Die US 2,724,225 A offenbart eine Verpackungsmaschine, bei der eine Bewegung eines Kolbens zum Erzeugen eines Druckstoßes verwendet wird. Der Druckstoß dient dazu, die geschlossene Verpackung, die eine Aluminiumschale und einen Deckel aus Papier oder Karton umfasst, aus der Maschine auszustoßen.

Aufgabe der vorliegenden Erfindung ist es, eine Verpackungsmaschine und ein Verfahren zum Betrieb einer solchen Verpackungsmaschine zur Verfügung zu stellen, bei denen die vorstehend beschriebenen Anforderungen erfüllt werden.

Diese Aufgabe wird gelöst durch eine Tiefziehverpackungsmaschine mit den Merkmalen des Anspruchs 1 bzw. durch ein Verfahren zum Betrieb einer solchen Verpackungsmaschine nach Anspruch 7. Vorteilhafte Weiterbildungen der Erfindung sind in den Unteransprüchen angegeben.

Bei Verpackungsmaschinen, insbesondere Tiefziehverpackungsmaschinen, sind die Antriebe von Folienvorschub der Unterfolie und Hubsysteme der Arbeitsstationen z.B. zum Formen, Siegeln und Schneiden oft motorisch angetrieben. Beispielsweise bewegt dabei ein Motor an der Formstation zum Schließen der Kammer das Formwerkzeugunterteil mittels eines Hubwerks nach oben. Anschließend werden in der geschlossenen Kammer in eine durch eine Heizplatte erwärmte Folienbahn mittels Druckluft und/oder Vakuum Mulden tiefgezogen bzw. geformt. Mit einer darauf folgenden Abwärtsbewegung des Formwerkzeugunterteils wird die Kammer wieder geöffnet und die Folienbahn mit den geformten Mulden für durch den Folienvorschub weitertransportiert.

Die Auf- und Abbewegung des Formwerkzeugunterteils wird durch ein Hubwerk realisiert, das die Bewegung des motorischen Antriebs in eine Hub-Bewegung wandelt. Gemäß der erfinderischen Verpackungsmaschine hat diese eine Einrichtung zur Erzeugung von Druckluft, um auf eine zugeführte Druckluft von außerhalb verzichten zu können. Diese Einrichtung zur Erzeugung von Druckluft wird durch die Bewegung des Hubwerks der Arbeitsstation angetrieben.

Vorteilhafterweise ist die Bewegung des Hubwerks vertikal. Durch die Gewichtskraft vor allem des Formwerkzeugunterteils ist der Wirkungsgrad am größten, wenn die Bewegungsrichtung nach unten im Hubwerk ausgenutzt wird.

Es kann z. B. dann vorteilhaft sein, beide Bewegungsrichtungen zum Antreiben der Einrichtung zur Erzeugung von Druckluft zu nutzen, wenn der Bedarf an erzeugter Druckluft entsprechend hoch ist oder ein erhöhter Druck erforderlich ist.

Da die unterschiedlichen Prozesse wie Erwärmen der Folienbahn, Formen, Evakuieren, Begasen, Siegeln, Schneiden, Vorschub der Folienbahn, Einlegen von Produkten, Hubwerksbewegungen der Arbeitsstationen etc. im Produktionsprozess festgelegt sind, ist es gemäß der Erfindung vorteilhaft, die durch die Einrichtung erzeugte Druckluft in einem Druckluftspeicher zwischenzuspeichern, um diese in den folgenden Prozessen zur Verfügung stellen zu können, da diese Prozesse nicht zwingend zeitgleich erfolgen.

In der erfindungsgemäßen Verpackungsmaschine ist die Einrichtung zur Erzeugung der Druckluft beispielsweise über mechanische und/oder hydraulische Mittel mit dem Hubsystem einer oder mehrerer Arbeitsstationen verbunden.

Vorteilhafterweise umfasst die Einrichtung eine Kolbenpumpe, die die Bewegungen des Hubwerks zum Komprimieren von Luft nutzt. Diese komprimierte Luft wird dem Druckluftspeicher zugeführt und dort gespeichert und/oder komprimiert.

Erfindungsgemäß ist die Arbeitsstation als Formstation einer Tiefziehverpackungsmaschine ausgeführt, die die Einrichtung zur Erzeugung von Druckluft antreibt, da an der Formstation selbst der höchste Druckluftverbrauch vorliegt und somit durch kurze Leitungslängen geringste Verluste vorliegen.

Die Einrichtung umfasst zweckmäßigerweise Ventile, die mit einer Steuerung verbunden sind. Die Ventile werden entsprechend der Bewegung des Hubwerks, des Zustands des Druckluftspeichers und des Prozesses der Arbeitsstation gesteuert.

Bei dem erfindungsgemäßen Verfahren zum Betrieb der Tiefziehverpackungsmaschine mit einer Arbeitsstation und einer Einrichtung zum Erzeugen von Druckluft wird die Einrichtung mittels mechanischer und/oder hydraulischer Verbindung durch die Bewegung des Hubwerks der Arbeitsstation angetrieben.

Anschließend wird die erzeugte Druckluft zur Zwischenspeicherung in einem Druckluftspeicher aufgenommen. Damit steht die Druckluft den Prozessen zum benötigten Zeitpunkt zur Verfügung.

Vorteilhaft ist die Erzeugung von Druckluft in ein oder zwei aufeinander folgenden Arbeitszyklen der Arbeitsstation und die wenigstens teilweise Verwendung dieser erzeugten Druckluft im gleichen Arbeitszyklus. Ein Arbeitszyklus beispielsweise einer Formstation besteht aus folgenden sich wiederholenden Schritten:
0. Schließen der Formstation durch Bewegen des Formwerkzeugunterteils nach oben;
1. Erwärmen der Folienbahn mittels einer Heizplatte im Formwerkzeugoberteil;
2. Formen einer Mulde durch Zuführen der Druckluft aus dem Druckluftspeicher in das Formwerkzeugoberteil und/oder durch Anlegen von Vakuum im Formwerkzeugunterteil;
3. Belüften der Kammer und Öffnen der Formstation durch Bewegen des Formwerkzeugunterteils nach unten
4. Transportieren der Folienbahn mit den geformten Mulden aus der Formstation durch den Folienvorschub.

Um einen möglichst hohen Wirkungsgrad zu erreichen und die Energiekosten niedrig zu halten, wird bei dem erfindungsgemäßen Verfahren die Druckluft in den Schritten 3 und 0 erzeugt und im darauf folgenden Arbeitszyklus im Schritt 2 zum Formen von Mulden in eine Folienbahn in der Formstation verwendet.

Die erzeugte Druckluft wird mittels Ventilen, die mit einer Steuerung verbunden sind, dem Druckluftspeicher und/oder der Arbeitsstation zugeführt.

In weiteren Varianten ist es denkbar, dass mehrere Druckluftspeicher vorhanden sind oder dass weitere Arbeitsstationen wie Siegelstation oder Schneidstationen mittels ihrer Hubwerksbewegungen gemeinsam Druckluft mittels Kolbenpumpen oder gleich wirkenden Vorrichtungen erzeugen und diese einem oder mehreren Druckluftspeichern zuführen. Ebenso kann die Druckluft in dem oder den Druckluftspeichern mehrerer Arbeitsstationen für entsprechende Prozessabläufe zugeführt werden.

Im Folgenden wird ein vorteilhaftes Ausführungsbeispiel der Erfindung anhand einer Zeichnung näher erläutert. Im Einzelnen zeigen:
- Figur 1: eine schematische Seitenansicht einer erfindungsgemäßen Verpackungsmaschine in Form einer Tiefziehverpackungsmaschine,
- Figur 2: eine schematische Ansicht einer Einrichtung zum Erzeugen von Druckluft,
- Figur 3: eine schematische Seitenansicht einer Einrichtung mit Ventilen

Gleiche Komponenten werden in den Figuren durchgängig mit gleichen Bezugszeichen versehen.

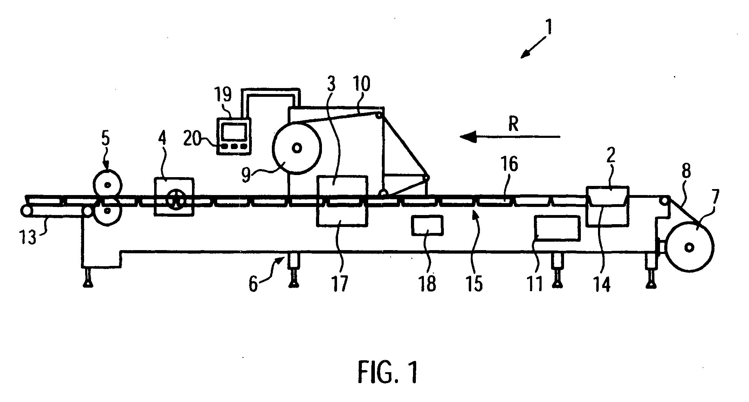

Figur 1 zeigt in schematischer Ansicht eine erfindungsgemäße Verpackungsmaschine 1 in Form einer Tiefziehverpackungsmaschine. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Arbeitsrichtung R an einem Maschinengestell 6 angeordnet sind. Eingangsseitig befindet sich an dem Maschinengestell 6 eine Zufuhrrolle 7, von der eine Folie 8 abgezogen wird. Im Bereich der Siegelstation 3 ist ein Materialspeicher 9 vorgesehen, von dem eine Deckelfolie 10 abgezogen wird. Ausgangsseitig ist an der Verpackungsmaschine eine Abfuhreinrichtung 13 in Form eines Transportbandes vorgesehen, mit der fertige, vereinzelte Verpackungen abtransportiert werden. Ferner weist die Verpackungsmaschine 1 eine nicht dargestellte Vorschubeinrichtung auf, die Folie 8 ergreift und diese pro Hauptarbeitstakt in der Arbeitsrichtung R weitertransportiert. Die Vorschubeinrichtung kann zum Beispiel durch beidseitig angeordnete Transportketten ausgeführt sein.

In der dargestellten Ausführungsform ist die Formstation 2 als eine Tiefziehstation ausgebildet, bei der in die Folie 8 durch Tiefziehen Mulden 14 geformt werden. Dabei kann die Formstation 2 derart ausgebildet sein, dass in der Richtung senkrecht zur Arbeitsrichtung R mehrere Mulden nebeneinander gebildet werden. Eine Einrichtung 11 zur Erzeugung der zum Tiefziehen benötigten Druckluft ist im Bereich nach der Formstation 2 und unter einer Einlegestrecke 15 im Maschirieninneren dargestellt. In Arbeitsrichtung R hinter der Formstation 2 ist die Einlegestrecke 15 vorgesehen, in der die in der Folie 8 geformten Mulden 14 mit Produkt 16 befüllt werden.

Die Siegelstation 3 verfügt über eine verschließbare Kammer 17, in der die Atmosphäre in den Mulden 14 vor dem Versiegeln zum Beispiel durch Gasspülen mit einem Austauschgas oder mit einem Gasgemisch ersetzt werden kann.

Die Querschneideeinrichtung 4 ist als Stanze ausgebildet, die die Folie 8 und die Deckelfolie 10 in einer Richtung quer zur Arbeitsrichtung R zwischen benachbarten Mulden 14 durchtrennt. Dabei arbeitet die Querschneideeinrichtung 4 derart, dass die Folie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der die Folie 8 und die Deckelfolie 10 zwischen benachbarten Mulden 14 und am seitlichen Rand der Folie 8 durchtrennt werden, so dass hinter der Längsschneideeinrichtung 5 vereinzelte Verpackungen vorliegen.

Die Verpackungsmaschine 1 verfügt ferner über eine Steuerung 18. Sie hat die Aufgabe, die in der Verpackungsmaschine 1 ablaufenden Prozesse zu steuern und zu überwachen. Eine Anzeigevorrichtung 19 mit Bedienelementen 20 dient zum Visualisieren bzw. Beeinflussen der Prozessabläufe in der Verpackungsmaschine 1 für bzw. durch einen Bediener.

Die generelle Arbeitsweise der Verpackungsmaschine 1 wird im Folgenden kurz beschrieben.

Die Folie 8 wird von der Zufuhrrolle 7 abgezogen und durch die Vorschubeinrichtung in die Formstation 2 transportiert. In der Formstation 2 werden durch Tiefziehen Mulden 14 in die Folie 8 gebildet. Die Mulden 14 werden zusammen mit dem umgebenden Bereich der Folie 8 in einem Hauptarbeitstakt zu der Einlegestrecke 15 weitertransportiert, in der sie mit Produkt 16 befüllt werden.

Anschließend werden die befüllten Mulden 14 zusammen mit dem sie umgebenden Bereich der Folie 8 in dem Hauptarbeitstakt durch die Vorschubeinrichtung in die Siegelstation 3 weitertransportiert. Die Deckelfolie 10 wird nach einem Ansiegelvorgang an die Folie 8 mit der Vorschubbewegung der Folie 8 weitertransportiert. Dabei wird die Deckelfolie 10 von dem Materialspeicher 9 abgezogen. Durch das Ansiegeln der Deckelfolie 10 auf die Mulden 14 entstehen verschlossene Verpackungen, die in den nachfolgenden Schneidungen 4 und 5 vereinzelt und mittels der Abfuhreinrichtung 13 aus der Verpackungsmaschine heraustransportiert werden.

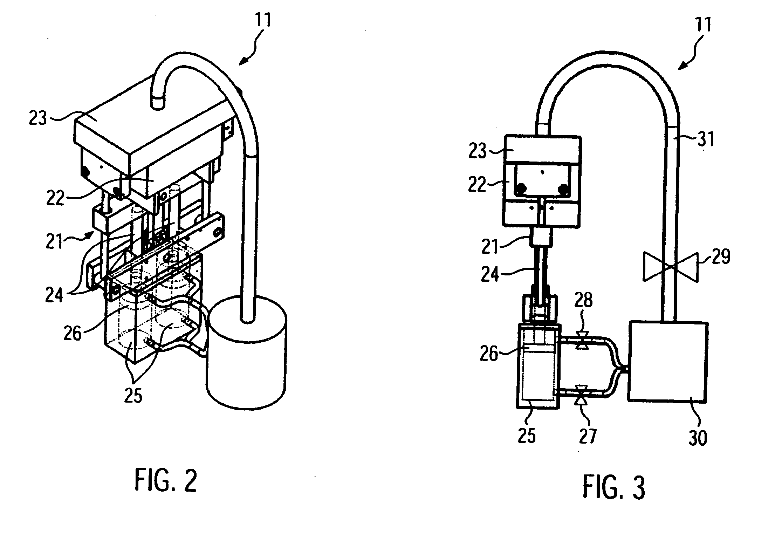

In der Figur 2 ist die Einrichtung 11 zur Drucklufterzeugung mit einem Hubwerk 21 für die Formstation 2 dargestellt. Das Hubwerk 21 bewegt ein Formwerkzeugunterteil 22 an das Formwerkzeugoberteil 23 und bildet damit eine geschlossen Kammer. Nach dem Formprozess bewegt das Hubwerk 21 das Formwerkzeugunterteil 22 nach unten und öffnet damit die Kammer.

Mittels Schubstangen 24, die mit dem Hubwerk 21 und zwei Kolbenpumpen 25 verbunden sind, wird bei einer Hubbewegung des Hubwerks 21 nach unten die Luft unterhalb der Kolben 26 der Kolbenpumpen 25 komprimiert. Bei der Hubbewegung nach oben kann auch die Luft oberhalb der Kolben 26 komprimiert werden.

In Figur 3 sind Ventile 27, 28 und 29 dargestellt, sowie ein Druckluftspeicher 30. Bei einer Bewegung des Hubwerks 21 nach unten sind die Ventile 28 und 29 geschlossen und das Ventil 27 geöffnet, um die Luft dem Druckluftspeicher 30 zuzuführen und zu komprimieren. Dabei wird der Kolbenpumpe 25 oberhalb des Kolbens 26 durch eine nicht dargestellte Einrichtung Umgebungsluft zugeführt.

Bei einer Bewegung des Hubwerks 21 nach oben sind die Ventile 27 und 29 geschlossen und das Ventil 28 geöffnet, um die Luft dem Druckluftspeicher 30 zuzuführen und zu komprimieren. Dabei wird der Kolbenpumpe 25 unterhalb des Kolbens 26 durch eine nicht dargestellte Einrichtung Umgebungsluft zugeführt.

Nach den Hubbewegungen werden die Ventile 27 und 28 geschlossen und die komprimierte Luft aus dem Druckspeicher 30 nach Öffnen des Ventils 29 über Leitung 31 dem Formwerkzeugoberteil 23 zugeführt, um die Mulden 14 in die Folienbahn 8 zu formen bzw. tiefzuziehen.

Ebenso ist ein Ablauf denkbar, bei dem mehrere Hubbewegungen durchgeführt werden, ohne die Druckluft für einen Prozess zu verbrauchen, aber um den Druck in dem Druckluftspeicher 30 zu erhöhen.

## Patentansprüche

1. Tiefziehverpackungsmaschine (1) mit einer Formstation (2) und einer Einrichtung (11) zur Erzeugung von Druckluft, wobei die Einrichtung (11) zur Erzeugung von Druckluft mit einem Hubwerk (21) der Formstation (2) verbunden ist, wobei das Hubwerk (21) dazu ausgebildet ist, eine Bewegung eines motorischen Antriebs in eine Hubbewegung zu wandeln, durch die ein Formwerkzeugunterteil (22) der Formstation (2) eine Auf- und Abbewegung ausführt, wobei die Einrichtung (11) mittels einer Auf- und Abbewegung des Hubwerks (21) der Formstation (2) antreibbar ist.

2. Tiefziehverpackungsmaschine nach Anspruch 1, **dadurch gekennzeichnet, dass** die Bewegungsrichtung des Hubwerks (21) der Formstation (2) vertikal ausgeführt ist.

3. Tiefziehverpackungsmaschine nach einem der vorigen Ansprüche, **dadurch gekennzeichnet, dass** die Einrichtung (11) zur Erzeugung von Druckluft einen Druckluftspeicher (30) umfasst.

4. Tiefziehverpackungsmaschine nach einem der vorigen Ansprüche, **dadurch gekennzeichnet, dass** die Einrichtung (11) zur Erzeugung von Druckluft über mechanische, pneumatische und/oder hydraulische Mittel mit dem Hubwerk (11) der Formstation (2) verbunden ist.

5. Tiefziehverpackungsmaschine nach einem der vorigen Ansprüche, **dadurch gekennzeichnet, dass** die Einrichtung (11) zur Erzeugung von Druckluft eine Kolbenpumpe (25) umfasst.

6. Tiefziehverpackungsmaschine nach einem der vorigen Ansprüche, **dadurch gekennzeichnet, dass** die Einrichtung (11) zur Erzeugung von Druckluft Ventile (27, 28, 29) umfasst und die Ventile (27, 28, 29) mit einer Steuerung (18) verbunden sind.

7. Verfahren zum Betrieb einer Tiefziehverpackungsmaschine (1) mit einer Formstation (2) und einer Einrichtung (11) zur Erzeugung von Druckluft, wobei ein Hubwerk (21) eine Bewegung eines motorischen Antriebs in eine Hubbewegung wandelt, durch die ein Formwerkzeugunterteil (22) der Formstation eine Auf- und Abbewegung ausführt, und wobei die Einrichtung (11) zur Erzeugung von Druckluft mittels einer mechanischen und/oder hydraulischen Verbindung durch die Auf- und Abbewegung des Hubwerks (21) der Formstation (2) angetrieben wird.

8. Verfahren nach Anspruch 7, **dadurch gekennzeichnet, dass** die erzeugte Druckluft in einem Druckluftspeicher (30) aufgenommen wird.

9. Verfahren nach Anspruch 7 oder 8, **dadurch gekennzeichnet, dass** die Druckluft bei einem oder zwei aufeinander folgenden Arbeitszyklen der Formstation erzeugt wird und die erzeugte Druckluft wenigstens zum Teil im gleichen Arbeitszyklus in der Formstation (2) verwendet wird.

10. Verfahren nach einem der Ansprüche 7 oder 8, **dadurch gekennzeichnet, dass** die in einem Arbeitszylinder der Formstation (2) erzeugte Druckluft in dem folgenden Arbeitszyklus der Formstation (2) verwendet wird.

11. Verfahren nach einem der Ansprüche 7 bis 10, **dadurch gekennzeichnet, dass** die erzeugte Druckluft zum Formen einer Kunststoffbahn (8) verwendet wird.

12. Verfahren nach einem der Ansprüche 7 bis 11, **dadurch gekennzeichnet, dass** die erzeugte Druckluft mittels Ventilen (27, 28, 29), die mit einer Steuerung (18) verbunden sind, dem Druckluftspeicher (30) und/oder der Formstation (2) zugeführt wird.

## Claims

1. Thermoforming packaging machine (1) comprising a forming station (2) and a device (11) for generating compressed air, wherein the device (11) for generating compressed air is connected to a lifting gear (21) of the forming station (2), wherein the lifting gear (21) is configured to convert a movement of a motor drive into a lifting movement, by which a forming tool lower part (22) of the forming station (2) carries out an upward and downward movement, wherein the device (11) is drivable by means of an upward and a downward movement of the lifting gear (21) of the forming station (2).

2. Thermoforming packaging machine as claimed in claim 1, **characterized in that** the direction of movement of the lifting gear (21) of the forming station (2) is implemented vertically.

3. Thermoforming packaging machine as claimed in one of the preceding claims, **characterized in that** the device (11) for generating compressed air comprises a compressed air reservoir (30).

4. Thermoforming packaging machine as claimed in one of the preceding claims, **characterized in that** the device (11) for generating compressed air is connected to the lifting gear (11) of the forming station (2) via mechanical, pneumatic and/or hydraulic means.

5. Thermoforming packaging machine as claimed in one of the preceding claims, **characterized in that** the device (11) for generating compressed air comprises a piston pump (25).

6. Thermoforming packaging machine as claimed in one of the preceding claims, **characterized in that** the device (11) for generating compressed air comprises valves (27, 28, 29), and the valves (27, 28, 29) are connected to a controller (18).

7. Method for operating a thermoforming packaging machine (1) comprising a forming station (2) and a device (11) for generating compressed air, wherein a lifting gear (21) converts a movement of a motor drive into a lifting movement, by means of which a forming tool lower part (22) of the forming station carries out an upward and downward movement, and wherein the device (11) for generating compressed air is driven by means of a mechanical and/or hydraulic connection by the upward and downward movement of the lifting gear (21) of the forming station (2).

8. Method as claimed in claim 7, **characterized in that** the compressed air generated is received in a compressed air reservoir (30).

9. Method as claimed in claim 7 or 8, **characterized in that** the compressed air is generated during one or two successive work cycles of the forming station and the compressed air generated is used at least partially in the same work cycle in the forming station (2).

10. Method as claimed in one of claims 7 to 9, **characterized in that** the compressed air generated in a working cylinder of the forming station (2) is used in the successive work cycle of the forming station (2, 3, 4).

11. Method as claimed in one of claims 7 to 10, **characterized in that** the compressed air generated is used for forming a plastic web (8).

12. Method as claimed in one of claims 7 to 11, **characterized in that** the compressed air generated is supplied by means of valves (27, 28, 29), which are connected to a controller (18), to the compressed air reservoir (30) and/or the forming station (2).

## Revendications

1. Machine d'emballage à emboutissage (1) comprenant une station de formage (2) et un dispositif (11) pour générer de l'air comprimé, dans laquelle le dispositif (11) pour générer de l'air comprimé est connecté à un dispositif de levage (21) de la station de formage (2), dans laquelle le dispositif de levage (21) est constitué pour convertir un mouvement d'un entraînement motorisé en un mouvement de levage, grâce auquel un outil de formage inférieur (22) de la station de formage (2) effectue un mouvement montant et descendant, dans laquelle le dispositif (11) peut être entraîné à l'aide d'un mouvement montant et descendant du dispositif de levage (21) de la station de formage (2).

2. Machine d'emballage à emboutissage selon la revendication 1, **caractérisée en ce que** la direction du mouvement du dispositif de levage (21) de la station de formage (2) est verticale.

3. Machine d'emballage à emboutissage selon l'une des revendications précédentes, **caractérisée en ce que** le dispositif (11) de génération d'air comprimé comprend un réservoir d'air comprimé (30).

4. Machine d'emballage à emboutissage selon l'une des revendications précédentes, **caractérisée en ce que** le dispositif (11) de génération d'air comprimé est connecté via un moyen mécanique, pneumatique et/ou hydraulique au dispositif de levage (11) de la station de formage (2).

5. Machine d'emballage à emboutissage selon l'une des revendications précédentes, **caractérisée en ce que** le dispositif (11) de génération d'air comprimé comprend une pompe à piston (25).

6. Machine d'emballage à emboutissage selon l'une des revendications précédentes, **caractérisée en ce que** le dispositif (11) de génération d'air comprimé comprend des vannes (27, 28, 29), et les vannes (27, 28, 29) sont connectées à une commande (18).

7. Procédé de fonctionnement d'une machine d'emballage à emboutissage (1) comportant une station de formage (2) et un dispositif (11) pour générer de l'air comprimé, dans lequel un dispositif de levage (21) convertit un mouvement d'un entraînement motorisé en un mouvement de levage grâce auquel un outil de formage inférieur (22) de la station de formage effectue un mouvement montant et descendant, et dans lequel le dispositif (11) de génération d'air comprimé est entraîné à l'aide d'une connexion mécanique et/ou hydraulique par le mouvement montant et descendant du dispositif de levage (21) de la station de formage (2).

8. Procédé selon la revendication 7, **caractérisé en ce que** l'air comprimé généré est reçu dans un réservoir d'air comprimé (30).

9. Procédé selon la revendication 7 ou 8, **caractérisé en ce que** l'air comprimé est généré par un ou deux cycles de travail successifs de la station de formage, et l'air comprimé généré est utilisé au moins en partie dans le même cycle de travail dans la station de formage (2).

10. Procédé selon l'une des revendications 7 ou 8, **caractérisé en ce que** l'air comprimé généré dans un vérin de travail de la station de formage (2) est utilisé dans le cycle de travail suivant de la station de formage (2).

11. Procédé selon l'une des revendications 7 à 10, **caractérisé en ce que** l'air comprimé généré est utilisé pour former une bande plastique (8).

12. Procédé selon l'une des revendications 7 à 11, **caractérisé en ce que** l'air comprimé généré est envoyé au réservoir d'air comprimé (30) et/ou à la station de formage (2) à l'aide de vannes (27, 28, 29) qui sont connectées à une commande (18).
